# EUROPEAN PATENT APPLICATION

(11) **EP 1 876 573 A1**
(43) Date of publication of application: **09.01.2008**
(21) Application number: 07117609.3
(22) Date of filing: 18.03.2003
(51) Int. Cl.: G07G 1/14

(54) **A tax refund system**

(30) Priority: 31.10.2002 IE 20020850; 18.03.2002 GB 0206346
(62) Divisional of application: 03715284.0
(71) Applicant: European Tax Free Shopping Limited, Ballinahown, Galway (IE)
(72) Inventor: Barry, Gerard J., Galway (IE); Duffy, John, Galway (IE); Parkins, Christopher David, West Sussex (GB); Bews, Duncan Alexander, Northwood, Middlesex (GB)
(74) Representative: Gates, Marie Christina Esther

(57) **Abstract**

The present invention relates generally to the field of computers and in particular to methods and systems for processing tax refunds. Existing VAT refund systems are either expensive or overly cumbersome with paperwork. The present invention provides a solution to these problems by providing a tax claim system comprising a payment card system 1 suitable for accepting payment card transactions at a point of sale, the payment card system comprising a display for displaying information to a payment card system terminal user. The tax claim system further includes at least one data capture device for receiving card details from a payment cardholder and an indication receiving element for receiving an indication that a tax refund claim is required for a transaction. The system further provides a claim generation module for generating a tax refund claim in response to a received indication that a tax refund claim is required for a transaction and communicating this generated claim to an associated printer device.

## Description

### Field of the Invention

The present invention relates generally to the field of computers, payment cards and in particular to methods and systems for the delineation of persons eligible for, and/or processing of, claims for reduced or nil tax liability or tax refunds.

### Background to the Invention

In the majority of countries world-wide governments impose a tax on goods or services hereinafter referred to individually and/or collectively as goods. This tax is commonly referred to as value added tax (VAT), sales tax or purchase tax hereinafter referred to individually and/or collectively as VAT. Generally, the VAT is only payable by persons resident in the country in question and does not apply to goods being exported. In certain jurisdictions and circumstances, it may also apply to residents who are travelling abroad and exporting goods. In certain places, the VAT is only payable by residents within a certain geographical area, an example of this being local taxes applied by states in the USA and generally only payable by residents within the state in question.

It is typically a requirement that persons pay the VAT at the point of purchase and subsequently reclaim the VAT paid. In some cases, the VAT refund is advanced or not charged to the customer at the point of sale, and/or prior to Customs validation, often on the basis that the customer provides an eligibility guarantee. An example of an eligibility guarantee is an imprint of the customer's payment card. In the event that the customer does not fulfil the requirements for a VAT refund, including for example returning the VAT refund claim validated by Customs, the supplier or its agent may enforce the eligibility guarantee, for example, in the case of a payment card, by debiting the payment card of the customer for the VAT refund advanced and any associated fees where applicable.

Additionally, in certain instances VAT registered companies in one country can obtain a VAT refund for goods purchased in another country. For example, an Irish VAT registered company may be able to reclaim VAT back from the UK revenue authorities for VAT incurred in the UK, e.g. for conference or hotel services etc.

To simplify the process for customers, agencies exist for processing VAT refund requests on their behalf. These agencies are commonly referred to as VAT refunding agents or VAT Refunders hereinafter referred to generally as VRA's. VRA's may offer their services directly or through associates to the customers. The VAT refunding process will now be described in greater detail whilst appreciating that the individual steps of the process may be performed by the VRA or an associate of the VRA.

The process for obtaining a VAT refund using a VRA commences with the VRA providing retailers/merchants/suppliers with individual documentation for completion of a claim where a VAT refund is appropriate.

This claim documentation typically comprises, for example, a multi-part paper form (enabling an export sales invoice and/or VAT refund claim to be issued to customers).

The customer takes the claim(s), which have been completed by the supplier. The customer subsequently presents the completed claim(s) to a Customs official at the customer's point of departure from the country or region. The Customs official verifies the export by examining the goods and validates (for example by stamping) the claim(s). The customer then returns the validated claim documents to the VRA who in turn refunds the VAT to the customer often less a small commission, which is retained by the VRA. The VRA may then claim the VAT back from the appropriate government or in some cases provide the supplier with a report supported by the stamped claim(s) for the supplier to be allowed/recover the tax amount from the VAT authorities. The refunds are then paid by the government or supplier to the VRA as appropriate. In some instances the full VAT is refunded and the government VAT authorities or supplier pay a fee to the VRA.

A problem with the existing methods of processing VAT refunds is the volume of paper required to be processed for each individual transaction, for example the details entered on paper claims by the supplier's staff are often completed in triplicate with individual copies often going also to the customer, VRA, supplier and/or VAT authorities.

A known partial solution to this problem is the provision of bespoke computer systems in large supplier outlets popular with visiting tourists, whereby when a customer requests a VAT refund the customer is directed to a particular customer service desk, where the supplier enters the details into the system, which then prints a VAT refund claim for the customer. The system also stores details entered for the claim and subsequently forwards the details to the computer database of the VRA.

These dedicated systems are however expensive, complicated and are not user friendly whilst, separately, are also completely unsuitable for smaller supplier outlets or outlets where the volume of tourist related purchases is small.

A further problem is the difficulty of suppliers and/or their staff delineating customers who may be entitled to potential saving on the customers VAT liability.

Another further problem is the amount of paperwork, administration and controls involved for customers, suppliers and VAT authorities, in particular when purchases involve smaller amounts and/or smaller suppliers.

Yet a further problem is the verification of the refund at the point of departure where multiple claims require individual pre-validation analysis by Customs and/or the VRA.

Accordingly, there is a need for an improved system for processing VAT refund claims.

### Summary of the Invention

Accordingly, these needs and others are met by the present invention, of which a first embodiment provides a VAT refund transaction record system comprising a payment card system suitable for performing payment card transactions at a point of sale, the card system comprising a display for displaying information to a card system user,
at least one data capture device for receiving card details from a cardholder,
an indication receiving element for receiving an indication that a VAT refund record may be appropriate for a transaction, and
a record generation module for generating a VAT refund transaction record in response to a received indication that a VAT refund record is appropriate for a transaction and communicating this generated record to at least one associated record output device.

The record output device may comprise a printer for printing a VAT refund claim.
The record output device may comprise a communications device adapted to forward generated transaction records to a host.
The record output device may comprise a memory writer adapted to output VAT refund transaction records to a removable data storage device. The removable data storage device may be a memory card.

The payment card system may include a VAT recognition module for recognising from the card details entered for a payment card presented by a cardholder for payment whether or not the cardholder may be eligible to a VAT refund. In response to a recognition that a cardholder may be eligible to a VAT refund, the VAT recognition module may cause a message to be displayed on the display and/or cause a beep to be emitted from the speaker of the card system or other prompting method such that the it is clearly brought to the attention of the terminal user that a VAT refund is possible.

The VAT recognition module may be adapted to identify an issuer code from the card details, and from the issuer code determine whether the cardholder is entitled to a VAT refund. To achieve this, the VAT recognition module may compare the extracted issuer code with selections in a table. Each selection in the table may contain an issuer code and a corresponding VAT class code. Alternatively, the selections in the table may define a range of issuer codes, with each range of issuer codes having a corresponding VAT class code. In its simplest embodiment, the VAT class code may be a flag indicating whether the issuer code relates to a cardholder from a country to which the customer would be entitled to a VAT refund.

Alternatively, the VAT recognition module may extract a country identifier from the card details and from this country identifier determine whether the cardholder is potentially entitled to a VAT refund. The VAT recognition module may also exploit other read/capture inputted details, for example passport and/or immigration numbers etc. These options enhance the eligibility delineation for potential zero VAT liability for customers.

The system may be adapted to display a message prompting the terminal user to question the cardholder as to whether the cardholder desires a VAT refund claim form.

The indication receiving means may comprise a key on a keypad of the card system..

Optionally, the VAT recognition module may be adapted to initially check to determine if the transaction amount exceeds a predetermined minimum level for generating a VAT refund transaction record.

In a preferred embodiment, the system comprises a payment card terminal having an integrated display printer and or data writer.

Alternatively, the payment card magnetic stripe and/or chip or other details storage means may contain details that directly or indirectly facilitate delineation of the country of residence and/or the potential eligibility of customers.

Another embodiment encompasses a back office payment host or host's server connection to one or more tills.

The invention further extends to a method of operating a VAT refunding scheme for processing VAT refunds on transactions comprising the steps of:
a) in response to a request to create a refund transaction record for an individual, creating a refund transaction record,
b) associating the refund transaction record with the individual,
c) storing the associated transaction record
d) in response to receiving a request to process created refund transaction records, extracting stored transaction records associated with the individual and outputting the records associated with the individual in an aggregated form.

The association of the refund transaction record with the individual may be achieved using a unique identifier associated with the individual. The unique identifier may be the cardnumber of a payment card of the individual or the passport number of the individual.

A further embodiment of the invention comprises the method of determining whether a payment cardholder is entitled to a VAT refund by comparison of cardholder details obtained from the card with entries in a database.

The cardholder details may comprise a portion of the card number. Alternatively, the cardholder details may comprise a country code.

This method may be used in a payment card terminal or a till system for generating VAT refund claims. Optionally, the payment card terminal or till system may perform the method in conjunction with a host system.

The invention also extends to a computer system adapted to carry out the steps of anyone of the methods above. The computer system may be a payment card terminal or a POS till device incorporating payment card processing.

### Brief Description of the Drawings

The invention will now be described in greater detail with reference to the accompanying drawings in which:
Figure 1 is an overview of a exemplary system according to the present invention,
Figure 2 is a block diagram of a terminal according to the present invention,
Figure 3 is a flow chart of one exemplary aspect of operation of the present invention,
Figure 4 is a flow chart of a second exemplary aspect of operation of the present invention,
Figure 5 is a flow chart of a third exemplary aspect of operation of the present invention, and
Figure 6 is a flow chart of a new method of processing VAT refunds.

### Detailed Description of the Drawings

The inventors of the present invention have solved the problems associated with the prior art, by realising that the features of a VAT refund claim system could advantageously be integrated within a payment card processing system. Such payment card systems are present in most merchant outlets and the integration of a VAT refund transaction record system into these payment systems ensures that the electronic generation of VAT refund transaction records can be extended from a small minority of merchant outlets to the vast majority of merchant outlets without significant additional capital expenditure or complexity.

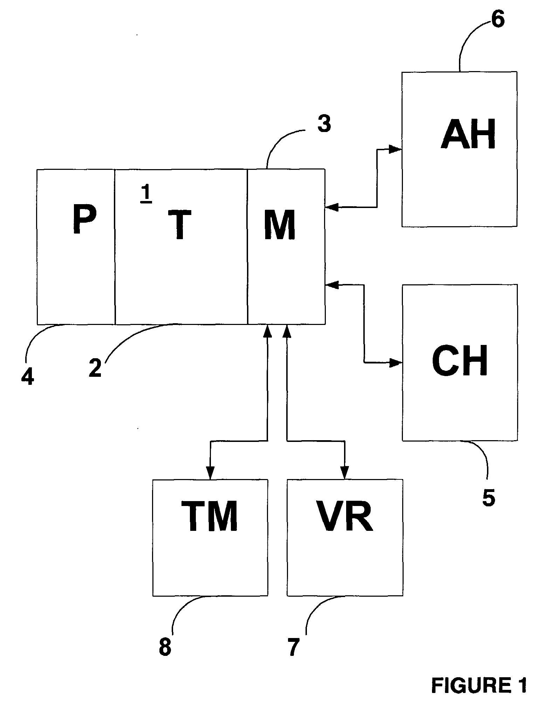

An exemplary embodiment of a payment card system 1 according to the invention, comprising a small point of sale (POS) payment card terminal 2, where payment card details and transaction details may be entered and processed according to techniques well know in the art, is illustrated in Figure 1. The terminals 2 are conventionally provided with an integrated modem device 3, which facilitates the terminal making a dial-up connection over a public telephone network to an authorisation and/or capture host 6 for rejection or approval and/or capture of individual card transactions. Similarly, the terminal 2 may dial-up a collection host 5, for example at the end of a day, and up-load (batch) a number of payment card transactions for processing by the collection host 5. Conventionally, the terminals 2 are provided with a small printer 4 for printing transaction slips for signature by the cardholder. Normally, the printer 4 is integrated within the payment card terminal 2.

The terminal may also be configured to either receive a call from or make a call to a terminal management server 8. The terminal management server may facilitate for the upgrading and on-going maintenance of the software contained on terminals. Similarly, the terminal management server may update data stored in tables or like structures on terminals. It will be appreciated that although the authorisation host, collection host and terminal management features are shown individually, their functionality may be combined into one or more elements. For example, the functions of authorisation host 6 and collection host 5 may be integrated into a single entity.

In addition to the conventional elements described above, the payment card terminal comprises a record generation module which is adapted to allow for the creation of a VAT refund transaction record and the communication of the created transaction record to an associated transaction record output device or devices. The associated transaction record output device may be a communications device associated with the terminal (for example the terminal's modem) adapted to transmit VAT refund transaction records to the server 7 of a VRA. Although, the information is preferably uploaded using the terminal's modem in a similar fashion to the way in which payment card transaction data is uploaded to the collection host, the record output device may comprise a storage device arranged to store the VAT refund transaction record(s) on a removable storage medium, e.g. a data card, which may be removed and manually dispatched to a VRA. Alternatively, in a least preferred embodiment, sometimes the data may be printed out and the printed data dispatched by post, courier or facsimile to the VRA.

As an alternative or in addition to the communication of the VAT refund records to the VRA, a copy of the VAT refund transaction record may also be communicated to a transaction record output device for outputting a VAT refund transaction record for the customer. In this case the transaction record output device may comprise a printer for printing the VAT refund transaction record. The transaction record output device may also be, in addition to or in lieu of a printer, a storage device arranged to store the VAT refund transaction record(s) on a removable storage medium, including for example but not limited to electronic storage mediums such as a data or chip card associated with the customer.

Although, the server of the VRA is shown as an independent entity, it will be appreciated that this functionality could be combined with that of the Authorisation Host, Terminal Management Server or Collection Host. Similarly, it will be appreciated that the term server when referring to the VRA may refer to an intermediate device rather than the main computer server operated by the VRA for processing their transactions.

Although, the system of the present invention is described herein with reference to the actual processing of payment card transactions, it will be appreciated that it is not essential that the terminals for processing the VAT refund transaction records actually perform the tasks of processing payment card transactions.

For example, in certain circumstances, the payment card terminal which processes payment card transactions for the merchant may be beyond the control of the VRA or the VRA may be unable to negotiate a deal with card scheme members for their use and in this scenario, a merchant may be provided with an additional card terminal(s), the normal terminal(s) for processing payment card transactions (card authorisation, etc.) and the additional terminal(s) used primarily for processing VAT refund transactions. In this scenario, the payment card details may be obtained by swiping/reading the payment card through the reader of the additional terminal nonetheless so as to obtain customer information.

Similarly, the terminal user, for example a supplier sales assistant, may also require the generation of transaction records without the use of the payment card, e.g. where a customer pays by cash and requests a VAT refund transaction record. This may be implemented by assigning a key or key combination on the keypad, as an indication receiving means on the terminal to commence generation of a VAT refund transaction record (particularly in the absence of a payment card).

To avoid terminal user and customer confusion, the transaction record generation process should preferably not interfere with the normal card payment processing cycle (e.g. the typical steps of swiping/reading the payment card, entering transaction details, obtaining authorisation, and printing receipt for cardholder signature) and instead should follow after the payment processing cycle. However, it is believed that the productivity of the system, i.e. number of transaction records generated, could be greatly improved if the terminal user is made aware that a VAT refund transaction record is available, before the completion of the payment processing transaction. This may be achieved by a suitable message on the display or other suitable indication to the merchant, for example the words " TAX-FREE AVAILABLE " flashing in the top left of the screen (terminal display).

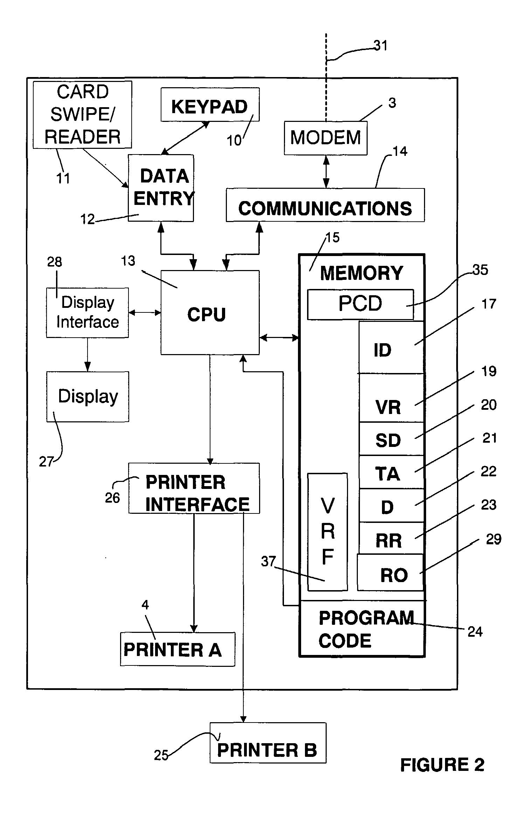

An exemplary terminal structure, as illustrated in Figure 2, for implementing the system of the present invention comprises a central processing unit (CPU) 13 and an associated memory 15. The memory 15 may be subdivided into one or more memory devices. For example, program code 24 for operating the terminal 2 may be stored in a ROM type memory device for example, an EEPROM or similar, whereas card transaction details may be stored in RAM memory. However for simplicity of explanation, the memory 15 is shown as a single block.

The program code may be segmented into different functional blocks or combined within a single block of code. For ease of explanation, the program code will be explained with reference to three blocks of functionality, a payment card transaction module which is responsible for payment card transaction processing, a transaction record generation module, which is responsible for the generation of VAT refund transaction records and includes the receiving of data required for the generation of the VAT refund transaction records, and a VAT recognition module which is used to determine whether a VAT refund transaction record may be required. It will be appreciated by those skilled in the art of software that these blocks may be integrally constructed or share common code or functionality, but are described separately herein for the purposes of explanation.

In order to receive data from terminal users and/or payment cards, the terminal is provided with one or more data capture devices, for example a keypad 10 and/or card swipe/reader device 11 for swiping the magnetic strips on payment cards and/or chip and/or other payment card payment reading devices etc. Similarly, connections may be provided to other devices, for example a POS till and/or data reader/writer, to receive transaction data. A suitable data capture interface 12 is provided between the CPU 13 and data capture devices 10,11. In POS payment terminals, the data capture devices are commonly integrally incorporated within the terminal. Indeed the process may be entirely automated whereby an eligible customer is given a completed claim and/or transaction record data to facilitate its generation. An example of a suitable terminal for performing these functions would be an Omni3350 Terminal from VERIFONE used in conjunction with a Canon BubbleJet Printer to print the voucher.

To facilitate the generation of a VAT refund transaction record, an indication receiving means (element) may be provided. The indication receiving element may, for example, be implemented as a pre-determined key or key sequence on a keypad 12 or other data capture device. The pre-determined key or key sequence may have different functions when the transaction record process is inactive, for example during the entering and processing of a payment transaction.

Similarly, in order to print receipts, transaction documents and the like, the terminal may be provided with a printer interface 26 which allows data from the CPU to be passed to an associated printer device 4. Frequently, the terminals include an integrated printer device 4. For payment card transactions, the printer paper width is typically limited to narrow width rolls of paper (approximately 6cm wide). The paper rolls are also prepared for the payment card system requirements.

VAT refund transaction records may however be required to be of a larger size and of a different format, for example the number and type of copies required.

To overcome this problem, a second printer 25 may be provided for the terminal. The second printer would be suitable for printing VAT refund transaction records. In use, the second printer would use paper of a format suitable for printing VAT refund transaction records.

To facilitate the displaying of information to the terminal user (e.g. supplier sales assistant), a suitable graphical or alpha-numeric display 27 is generally provided. Conventionally the display 27 is provided by a LCD or similar technology screen integrated within the terminal 2. A suitable display interface 28 is provided for receiving instructions from the CPU to display information and convert these signals into a format suitable for the display unit. Additional displays may be provided externally to the terminal, for example to facilitate the viewing of information by payment cardholders.

To communicate data between the terminal and other devices, e.g. an authorisation host, the terminal is provided with a communications module 14 which interacts with a communications device, typically a modem 3, to send and receive data from external devices over a telephone line 31 or across a network or similar connection.

In addition to storing the program code to operate the terminal, the memory is also used to store data. This data may either be set-up data required for the general use of the terminal or transaction data obtained from transactions. The transaction data for the present invention may be classed as either data relating to payment card transactions (purchases or refunds on payment cards) or VAT refund transaction record data. The payment card data table (PCD) 35 may be used to store details of payment card transactions prior to forwarding them to a collection host. The VAT refund transaction record data table (VRF) 37 may be used to store VAT refund transaction records for subsequent uploading to a host.

For ease of access and use, the set-up data is frequently stored in data structures referred to as data tables. The exact number and type of tables required may vary depending on a particular implementation. For the purposes of explanation, payment card data tables (PCD) 35, used to store set-up data relating only to payment card transactions (payment card data tables) and not directly required for the understanding of the present invention, have been omitted from the following exemplary list of set-up tables, which includes:
Vat Rates Table (VR) 19,
Supplier Details Table (SD) 20
Transaction Allocation Table (TA) 21
Description Table (D) 22
Refund Rate Table (RR) 23
Refund Options Table (RO) 29
ID Table (ID) 17

The contents of each of these tables will now be described in greater detail.

The VAT Rates Table 19 is used to store the VAT rates payable at any one time. Frequently, the VAT rate payable depends on the goods purchased, with certain goods being exempt from VAT, ineligible for a refund or charged at a higher/lower rate of VAT than other goods. In addition, it is not unknown for VAT rates to change from time to time. These changes have to be taken into account when preparing a VAT refund transaction record. An exemplary table structure for the VAT rates table is shown in Table 1 below.

**Table 1**

| **Field Name** | **Type** |
|---|---|
| VATCode | Char |
| VatRate | Numeric |
| VATFromDate | Date |
| VATToDate | Date |

The exemplary table provides four different fields, which are 'VATCode', 'VatRate', 'VATFromDate' and 'VATToDate'. The 'VATCode' field is used to identify individual VAT codes. The 'VatRate' field identifies the VAT rate associated with individual VAT codes. The 'VATFromDate' and the 'VATToDate' fields are used to identify the time periods when different rates apply. Thus, for example, if a rate change was due to take place on January 1st, the new rates could be uploaded some days beforehand so that the terminal would be ready for use in advance of the changeover date. However, the terminal would ignore the new rates until the 1st January. In use, the table may be used to calculate the VAT that has been paid on individual goods (explained below).

The Supplier Details Table 20 is used for the purposes of storing details of the merchant/shop/supplier/business operating the terminal 2. An exemplary table structure is provided in Table 2. The first few fields 'SupplierName', 'SupplierAddr1', 'SupplierAddr2' and 'SupplierAddr3' are used to store the name address of the supplier, for subsequent outputting of the VAT refund transaction records. Similarly, the 'SupplierVATNO' is used to store the registered VAT number of the supplier, which is also typically outputted for the VAT refund transaction records.

**Table 2**

| **Field Name** | **Type** |
|---|---|
| SupplierName | Char |
| SupplierAddr1 | Char |
| SupplierAddr2 | Char |
| SupplierAddr3 | Char |
| SupplierVATNo | Char |
| SupplierVATBACKNo | Char |

The Transaction Allocation Table, for which an exemplary structure shown in Table 3, is used to maintain track of transaction records, typically numbers. Each transaction record is assigned a unique number to assist with tracking of transaction records and matching of copies received from suppliers and customers seeking a refund. To pre-allocate each supplier with a large range of transaction numbers corresponding to the amount of transactions the supplier is likely to conduct over the lifetime of a terminal would be problematic as it would rapidly lead to an overrun in numbers and also reduce the ability of the VRA to track numbers. These numbers may be printed in digit and/or barcode form on the transaction records or captured on a data storage medium.

To overcome these problems, the Transaction Allocation table is used in conjunction with the terminal software. The terminal is initially loaded with a small range of transaction record numbers stored in primary fields, i.e. in the range starting from the value (number) held in the 'Transaction1StartFrom' field to the value held in the 'Transaction1EndAt' field. As transaction records are issued the 'Transaction1Next' field is incremented to indicate the next available transaction record number. When the value in the 'Transaction1Next' field reaches the value in the 'Transaction1EndAt' field, the terminal software is configured to dial up the host management system and request a new range of transaction record values. However, in certain circumstances the terminal may not be able to immediately obtain a new range of transaction record numbers, for example where the terminal fails to establish a connection with the host management system.

**Table 3**

| **Field Name** | **Type** |
|---|---|
| Transaction 1 StartFrom | Numeric |
| Transaction 1 EndAt | Numeric |
| Transaction 1 Next | Numeric |
| Transaction2StartFrom | Numeric |
| Transaction2EndAt | Numeric |
| Transaction2Next | Numeric |

In such circumstances, the terminal would no longer be in a position to allocate transaction records. To overcome this problem, the terminals are provided with a second range of transaction record codes, which are stored in the exemplary table 3 in the secondary fields 'Transaction2StartFrom', 'Transaction2EndAt', and 'Transaction2Next' fields. The function of each of the secondary fields corresponds to the equivalently named primary fields. When the first range of transaction records has been allocated, the system switches to the second range of transaction records delineated by the secondary fields. The system may continue to use the second range until it has been used up or alternatively if may revert to the first range after it has been replenished with a new range of transaction record numbers. In either case, once the second range has been used up a request is made to the host management system to replenish it. The use of two ranges provides for enhanced reliability of the process in the event of a communications or other failure with the host.

Although it is possible to type descriptions into point of sale terminals, it would be extremely cumbersome and difficult to do so on the small keypads typically provided with payment card terminals. For example, typical smaller terminals are provided with a keypad which resembles a telephone keypad, i.e. a set of numeric characters 0-9, a star key '*', and a hash key '#'. A limited number of special function keys may also be provided. The terminals are not generally provided with a QWERTY style keyboard for inserting text.

To overcome this problem, the present invention provides for the storage of typical descriptions of goods provided by the supplier in which the terminal is used. These descriptions may then be selected by the terminal user as required, e.g. by selecting an appropriate key or by entering an appropriate code. The descriptions table, an exemplary structure for which is illustrated in Table 4, is used to store these descriptions. The `DescNumber' field is used to store a code for identifying the individual goods, whereas the 'DescDetail' is used to store descriptions of the individual goods. These descriptions may be displayed as a list on the terminal display in order to allow a terminal user select goods from a list. Similarly, the descriptions may be displayed on the terminal display after a terminal user has made a selection, e.g. by entering a code.

**Table 4**

| **Field Name** | **Type** |
|---|---|
| DescNumber | Numeric |
| DescDetail | Char |
| DescDefaultVATCode | Char |

A problem that can frequently occur with untrained terminal user staff is that they may not know whether goods are subject to VAT or not. This problem can be compounded when there are different rates of VAT applicable to different goods. To overcome this difficulty, the present invention optionally provides for the association of goods with a default VAT code, in the present example using the 'DescDefaultVATCode' field. Thus, when a terminal user selects a particular good, the correct VAT code is automatically selected and the appropriate rate determined from the VAT rates table previously described, although provision may be included to facilitate the overriding of a default VAT code by a terminal user against a particular description at the time of transaction record generation.

Another problem with the existing paper based systems of VAT refunding is that the person requesting the refund is unaware of the amounts likely to be receivable or chargeable. Such data may be of particular importance when processing an immediate refund. The present invention provides a solution by enabling automatic inbuilt calculation of the refund and charges at the point of sale and attendant/supplemental transaction record data may be inserted/printed onto the vat refund transaction records for the benefit of the customer. This key dependent data may be stored in the Refund Rate Table, a sample structure for which is shown in Table 5.

**Table 5**

| **Field Name** | **Type** |
|---|---|
| ChargeCode | Numeric |
| ChargeVATCode | Numeric |
| ChargeFrom | Numeric |
| ChargeTo | Numeric |
| ChargeRefundPerc | Numeric |
| ChargeRefundAmt | Numeric |

As described previously, a purpose of the present invention is to provide a VAT transaction record claim system within a point of sale payment device. Although, it would appear an obvious choice to use the payment card presented for the subsequent processing of a refund to the customer, the customer may not want the refund using this option. In paper based methods of producing VAT refund claims, the person requesting the refund can typically request the manner in which they wish to receive a refund, for example by cheque, to a payment card account, or in cash at a special desk in the airport.

Similarly, as previously discussed there may not be a payment card transaction involving a payment card, i.e. the person may pay by cash, in which case there are no payment card details available to indicate as to where a refund may be channelled.

Accordingly, to overcome these problems the present invention provides for the inclusion of an option for entering the appropriate method for payment of any refund due. The Refund options table, an example structure for which is illustrated in table 6, provides for the storage and subsequent retrieval of these options.

**Table 6**

| **Field Name** | **Type** |
|---|---|
| RefundCode | Char |
| RefundDesc | Char |
| RefundSwipe | Char |

The purpose of the refund options table is to store the different possible methods by which a VAT refund may be paid to a customer. The exact refund methods available in a particular country or area may vary, for example, depending on the availability of a service or arrangement with a payment card provider/processor or the rules of operation of the local Customs authorities. The refund methods may for example include the use of payment cards of the type known as credit or charge cards, such as VISA, MASTERCARD, AMERICAN EXPRESS, JCB and DINERS CLUB. Similarly, the use of payment cards of the type commonly referred to as bank cards may be used as a refund method, for example SWITCH, SOLO or LASER cards.

An exemplary list of refund choices is shown in the following list:
01.VISA
02.MASTERCARD
03.AMERICAN EXPRESS
04.DINERS
05.JCB
06.CHEQUE
07.AIRPORT CASH
08.BANK ACCOUNT
09.UNKNOWN

In the case of data stored in the refund options table, the entry for VISA would for example have a value of '01' in the 'RefundCode' field with a value of 'VISA' in the 'RefundDesc' field. Thus if a terminal user was to key in the value 1 as the refund choice that would indicate that a refund was required to a VISA card.

Although, it is possible to include a separate field in the table to indicate if an instant refund was available, it may be preferable to provide a separate refund choice for instant refunds, so as to facilitate the subsequent importation of data into the VRA's computer systems. Otherwise, if a flag for instant refund is combined with the normal refund choice, the data may have to be transposed before importing to the VRA's computer systems.

The optional 'RefundSwipe' field may be used to store a flag to identify whether a payment method may require the capture of card details, for example by swiping/reading the card through the terminal card reader. Although, it will be appreciated that card details may already have been presented for the payment of the transaction (and thus already available in the terminal), further payment card details may be required. For example, the cardholder of the payment card may elect to use a different payment card for receipt of the refund to the one used to make the purchase. Similarly, the customer may have paid by cash for their purchase but request a refund to a payment card.

The 'RefundSwipe' field facilitates the simple implementation of this in software by indicating (from the flags stored for individual selections) whether a payment option requires card details to be validly selected. The system may default to the previously entered payment card details if not replaced by a second set of card details, which may for example be entered by swiping/reading a second payment card through a magnetic strip or chip based reader/writer of the terminal.

Although the list of payment options provided above appears extensive, it may be much larger depending of the facilities provided by the VRA. For example, the VRA may provide for the issuing of refunds by cheques in several different currencies. This may be achieved by providing a separate code for cheques in each currency. As the number of payment options increases, for example when a terminal user is scrolling through them, the list of options increases.

The Refund Options table may be adapted further to provide greater flexibility to the terminal users or VRA's with such numerous options. For example, a field may be provided in the refunds options table for indicating the category of each refund option selectable. Thus a refund category may be indicated as Cheque, which would identify the different payment options available by cheque, i.e. the different cheque currencies available. In such circumstances, a two step menu may be provided, with a first menu listing the categories of payment available and if applicable a second menu indicating the selection available within that category. It will be appreciated, that certain categories may only have one selection level only and thus no second menu may be required, e.g. where the option of receiving the refund as cash was selected.

In operation a default option may be identified in the absence of an alternative selection. For example, this may be a particular payment method, e.g. the first option listed (in the exemplary list shown VISA) or the method by which the customer has paid for the transaction.

One of the difficulties with current paper based VAT refund claims is the quantity of places where information may be inserted on the claim documents. This can be confusing for persons trying to complete the claims in order to obtain a refund. For example, if the options of paying a refund into a payment card or into a bank account are available, then separate places (insertion spaces) will be provided on the claim for each refund option. This may lead to confusion either by customers, i.e. where, and what, should the customer insert, or, for example by the VRA where two or more alternative insertion spaces can have relevant/redundant information inserted.

The present invention optionally provides a solution to this problem, by only printing insertion space for the requested refund method. For example, if a bank refund is requested then the system may print ''Bank Code." followed by spaces (or boxes) and then "Account No." followed by space (or boxes) to allow insertion of the customer's bank details. Several variations on this optional embodiment are possible, for example, where a transaction record is pre-printed with separate places for inserting credit card details or into a bank account. Instructions may be printed via the transaction record, indicating which space needs to be filled in for the customer or alternatively crossing out the non-required space. The information required to implement these options may be stored in a bank refund table or an alternative table. In certain circumstances, no insertion space information need be printed, e.g. where the information has already been obtained by swiping or reading/writing a chip based card or where the payment card incorporates an application for receiving such refund details and/or methods of refund.

Each of these refund options will have a corresponding refund code to the equivalent code used on the VRA Server, .i.e. "01" VISA. The code may be sent to the HOST.

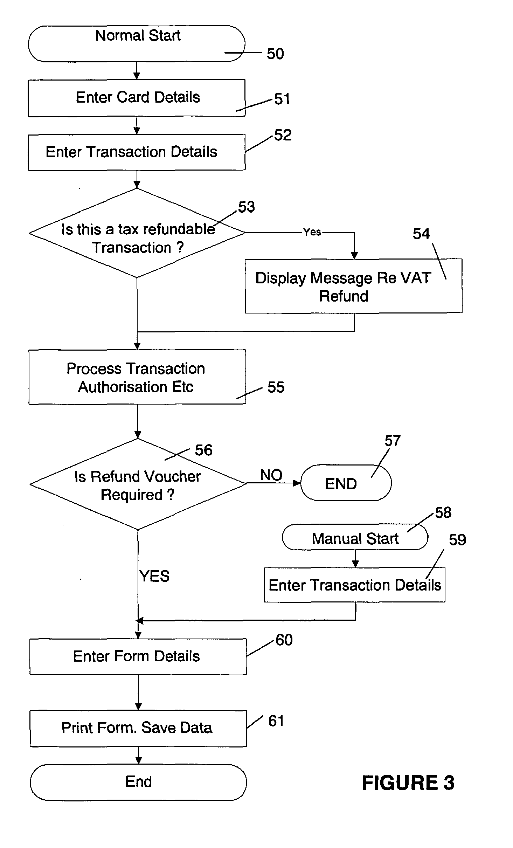

The invention will now be described in greater detail with reference to an exemplary method of use as illustrated by the flowchart of Figure 3. The method commences 50 with a cardholder presenting a payment and/or dedicated or co-branded VAT-free and/or loyalty type card to a merchant to make a purchase. The terminal user captures 51 the payment card details of the cardholder into the terminal, typically by swiping the card through the magnetic strip reader of the terminal and/or inserting a chip type card into a chip type card reader or other means. The details of the transaction, i.e. the value of the transaction, are then entered 52 (if not previously entered) by the terminal user.

Preferably before the transaction is completely processed, a check 53 is then performed by the VAT recognition module of the terminal to recognise whether the transaction may be a transaction for which a VAT refund transaction record may be required or could be generated. This check may include one or more different criteria including, for example, whether or not the transaction value exceeds a minimum value. Additionally, the criteria used by the VAT recognition module may include one or more tests to determine from the payment card details entered whether the customer may be entitled to a VAT refund transaction record. The test or tests may vary depending on the payment card type presented.

In the case of a payment card, for example VISA, the test may involve the extraction of an issuer code from the card number provided in the card details and the comparison of the extracted issuer code with selections in a table (for example the ID table 17). Each selection in the table 17 may contain an issuer code and a corresponding VAT class code. Alternatively, the selection in the table may define a range of issuer codes, with each range of issuer codes having a corresponding VAT class code. In its simplest embodiment, the VAT class code may be a flag indicating whether the issuer code relates to an issuer from a country to which the customer would be entitled to a VAT refund. Similarly, the table may identify the country and/or language associated with individual issuer codes, this information may subsequently be used for generation of the transaction record.

In the case of a bank card, e.g. LASER, Solo, Switch, Bancomat etc. the test may involve the use of the bank sort code from the card details. The sort code may be compared with selections in a table 17. Each selection in the table may contain a sort code and a corresponding VAT class code. Alternatively, the selections in the table may define a range of sort codes, with each range of sort codes having a corresponding VAT class code. In its simplest form, the VAT class code may be a flag indicating whether the issuer code relates to an issuer from a country to which the customer would be entitled to a vat refund. Similarly, the table may identify the country associated with individual sort codes, this information may subsequently be used for generation of the VAT refund transaction record. If the ID table 17 is used to store details of issuer identifiers and bank sort codes, then the ID table may include a field for identifying each type of selection, for example a flag may be used to identify whether it is an issuer code or a sort code.

Similarly, other methods may be used to identify possible transactions where a VAT refund transaction record may be required. For example, in certain instances a country or currency code may be available directly from the card details. In these cases the country or currency code may be compared with selections in a table. Each selection in the table may contain a country code or currency code and a corresponding VAT class code. In its simplest form, the VAT class code may be a flag indicating whether the currency or country issuer code relates to an issuer from a country whose citizens may be entitled to a VAT refund.

In response to a recognition that a customer may be entitled to a VAT refund, the VAT recognition module may cause a message to be displayed 54, e.g. "VAT-FREE AVAILABLE" on the terminal display. Preferably, this message is displayed while the payment transaction is being processed by the terminal. This facilitates the advance notification to a terminal user that a refund transaction record may be required.

The terminal processes the payment card transaction 55 using methods well known in the art, e.g. establish connection with authorisation host, obtain authorisation and print transaction slip. Once the transaction slip has been produced and the cardholder signature obtained and verified, the task of transaction record generation may commence.

The generation process may commence with the display of a message requesting the terminal user to confirm or reject whether a refund transaction record is required 56. The message may for example identify a particular key on the keypad as being an indication receiving element for receiving an indication that a VAT refund transaction record is required for a transaction. For example, the message may say "Press Key F1 to generate a transaction record or F2 to cancel".

The terminal user can abandon the task 57 or proceed with the generation of a transaction record by pressing an indication receiving element (e.g. F1 key). The indication receiving element may operate by default, i.e. the transaction record generation process may commence and continue with the terminal user entering details unless the terminal user keys a cancel key. In this case the indication receiving element may be understood to be the plurality of possible key codes apart from the cancel key function.

As an alternative to the normal start process described above involving a payment transaction, the method may also be started manually 58 by pressing an indication receiving element identified by a particular key (e.g. F1 key). This manual process may for example be required where a transaction was conducted without a payment card, for example cash or in situations where the terminal failed to identify the payment card as potentially belonging to a person who may be eligible for a VAT refund or whenever a customer asks for a VAT reclaim transaction record.

This manual process if not already provided, may require the terminal user to enter the transaction details 59, for example the total amount paid.

In either event, once the indication receiving element has received an indication that a transaction record is required, the transaction record generation module responds and commences the process of generating a VAT refund transaction record. The process may commence with the retrieval of the next available transaction record number, i.e. the value in the Transaction Next (or if applicable Transaction2Next) field from the Transaction Allocation Table. Once retrieved, the value in the Transaction1Next (or if applicable Transaction2Next) field is incremented to the next available value. Alternatively, the retrieval of the next available transaction record number may be performed at any stage prior to the completion of the printing and/or storage processes, which require the transaction record number.

The transaction record generation module may request further information 60 from the terminal user or may simply prepare a transaction record for printing 61 on an associated printer and/or in a data storage medium. In the case where printing is desired, the terminal user may be required to manually complete the VAT refund transaction record, for example using a pen, being a less preferred option since the information manually inserted on the paper transaction record will not be available for subsequent uploading from the terminal to the VRA.

In conducting a transaction, a customer may purchase several different items which may or may not have different VAT rates associated with those different items. In requesting a refund, the refund transaction record typically must detail the quantity and nature of the goods purchased and also the VAT paid. It is of considerable benefit to the VRA if the information is captured at the point of sale terminal and subsequently uploaded to the VRA's server and/or written to an electronic data storage medium e.g. a disk, chip card or other such storage medium.

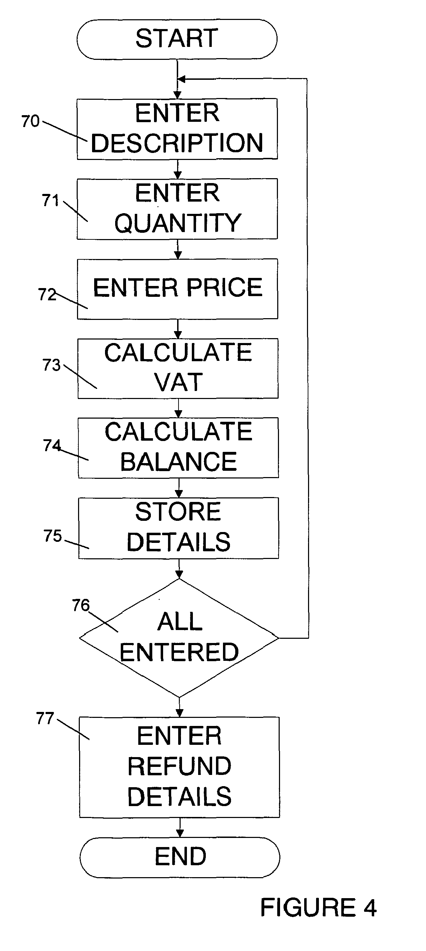

A further complication in the process of transaction record generation is that frequently VAT authorities necessitate that zero rated VAT items do not appear on a VAT refund transaction record. An exemplary process that may be used by the transaction record generation module to obtain information for the VAT refund transaction record will now be described, with reference to the flowchart of figure 4.

The initial steps in the process are the capturing of the description 70, quantity 71 and value 72 for individual types of goods purchased. As has been explained previously, whilst this may be performed by manually capturing the details using a keypad, i.e. typing in the details, this would be extremely difficult to perform using the conventional keypads provided with the most commonly used small point of sale payment terminals.

Accordingly, the transaction record generation means is preferably adapted to present a list of goods to the user to allow the use make a selection from the goods listed. This may readily be achieved in software by extracting the descriptions from the descriptions table (previously described). Using appropriate keys on the keypad, a terminal user can scroll through the list of goods and select the appropriate description to match the goods. A default description may be presented initially corresponding for example to the most popular type of good sold. If the terminal user is satisfied with a displayed description, the terminal user may select that displayed description, for example, by pressing the enter key.

An optional enhancement, or alternative to making a selection from a list, may be provided in which a terminal user may enter a code corresponding to a particular description. This option may for example be activated by the terminal user pressing a particular key, for example the "#" key. Upon activation, a cursor may be provided on the display, for example between square brackets, where the terminal user can enter one or more digits, but preferably two digits; for example "01" for "GOODS" or "84" for "Jacket". Once the second digit has been entered the description may be displayed. Optionally the terminal user may then be able to scroll from that position or confirm the selection.

Additionally, the terminal user may enter the quantity of goods purchased for the description selected. This quantity may be captured by keying an appropriate numeric key on the keypad or means of scrolling through a list of values. Finally, the price paid for the goods purchased may be captured, for example as a total or as a unit price. For simplicity of terminal use, it is preferable that the total price is captured.

To assist the terminal user, the price paid may default to the transaction value (or the transaction value less amounts already captured). If the terminal user wishes to change the transaction value, the terminal user can type the correct amount and press enter.

The transaction record generation module may then calculate the balance value 74, which is the overall transaction value less the amounts captured with descriptions by the terminal user. This balance value may be displayed to assist the terminal user in determining when the details have all been captured. As the terminal user captures details of the descriptions, quantities and price, the transaction record generation module stores the details for subsequent printing and/or uploading to the VRA's server and/or storing on a chip card or other data storage medium.

It will be appreciated that these steps may be performed in different orders without necessarily affecting the outcome of the process.

As explained previously, a difficulty encountered by terminal users completing the manual transaction records is that the terminal user may not appreciate the rate of VAT payable on particular goods. To overcome this problem, the transaction record generation module may be adapted to determine a VAT rate for goods captured and calculate 73 corresponding VAT on the goods. This determination may be readily made in the present invention using the VAT code stored against the goods in the descriptions table and using this code to determine a VAT rate applicable from the VAT rates table.

As each grouping of individual goods is captured the details are stored 75 in the terminal memory.

Once all of the goods have been captured, the terminal user may indicate completion by keying an appropriate key. The transaction record generation module may also determine 76 completion of the process, for example when the remaining balance is zero. If the task is not completed the process returns to the start of the process allowing the terminal user to capture the next set of goods for the refund.

Once all such captured data has been determined, the process provides for the capturing 77 of refund option details by the terminal user. Initially a refund options screen may be displayed to allow a terminal user to select a refund method, presumably requested by the customer.

The selection of a refund may be made with reference to the options available as contained within the Refund Options table. Alternatively, the refund may default to the payment card used for the transaction. In the event that the process of transaction record generation was manually initiated, it will be appreciated that card details for a payment card will need to be entered if the terminal user selects refund to a payment card. Similarly, if an instant refund is available and/or requested, the payment card details will be required in the event that the customer fails to validate the process, for example by failing to have the VAT refund transaction record subsequently verified by the Customs authorities at the appropriate point of departure.

Once the process of inserting the descriptions, quantities and amounts has been completed, and, if required, the inserting of refund details, the transaction record generation module may proceed to electronically generate the transaction records (although the electronic generation steps may have been integrated within the previously described steps for reasons of efficiency and speed). The collated data relating to the VAT refund transaction may be stored prior to or after completion of the printing step in the VAT refund transaction record data section 37 of the terminal's memory.

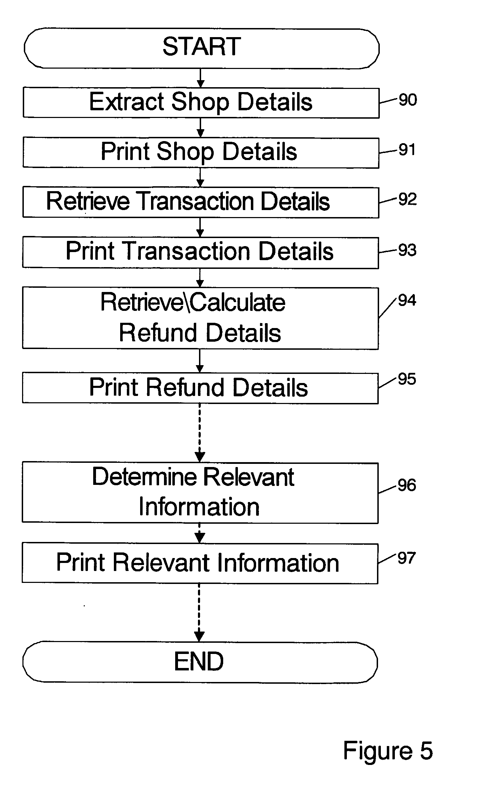

An exemplary process of transaction record generation is now explained in greater detail with reference to the flowchart of Figure 5.

The process may commence with the extraction 90 of the merchants (suppliers) details as contained and explained previously with reference to the Supplier Details Table. A template may be stored within the terminal detailing the particular locations for individual items of data to be presented on a transaction record. Once the supplier details have been extracted and correctly formatted and/or positioned, the supplier details may be printed 91 on the associated printer of the terminal for printing VAT refund transaction records.

Similarly, the goods details previously captured by the terminal user are retrieved 92 and printed on the transaction record 93, in a format in accordance with the previously described template, these details may include the description, quantity, prices and VAT amounts paid. In some jurisdictions, it is a requirement of the Revenue/VAT/Customs authorities that zero VAT rated items do not appear on VAT refund transaction records.

Accordingly, zero rated items may be omitted from the goods details printed on the transaction record. The total of the transaction may be adjusted accordingly to reflect the total of the non-zero VAT items. This total may also be printed on the transaction record.

The VAT and/or refund amounts etc. may be calculated.

Any refund details as captured previously by the terminal user may then be retrieved 94 and printed 95 on the transaction record, for example, if a refund to a bank account was requested. The transaction record generation module may print a space to allow the insertion of the customer's bank details, including, for example, the customer's bank sort code and account number.

A known problem for tourists/customers is that claims are frequently not printed in the customers own language and may thus be difficult to understand. One solution is to print multiple languages on the transaction record but this is limited because of space constraints and the significant number of possible languages. Another solution is to provide information leaflets in different languages to accompany the transaction records. However, this option adds considerable expense to the process. A further problem with the process, as previously described, is the volume of redundant information that appears on the transaction records.

To overcome these problems, the transaction record generation module of the present invention may optionally be adapted to provide for the selective determination 96 of relevant information. This relevant information may be retrieved from memory and subsequently printed 97 on the VAT refund transaction record or a separate sheet.

This optional embodiment will best be described with reference to an exemplary use. In the case where a refund option has been specified, the instructions required may vary, for example, if a refund to a bank account was selected. The transaction record generation module may print a space (or boxes) for inserting the bank sort code and bank account details. The instructions for completion of this will be different compared to the instructions appropriate where a refund is requested to a payment card. Accordingly, the terminal may be adapted to store different sets of information, with a particular set of information being extracted by a determination made with reference to the refund payment option selected.

The application of this embodiment is not limited to refund options and can be extended based on any information available. For example, as explained above, a determination of country (or language) may be made in certain circumstances from the payment card details presented. In these circumstances, the instructions provided on the transaction record may be determined based on the country or language of the customer. For example, whilst default instructions may be printed in English, if the customer was determined as being from France, an additional (or replacement) set of instructions could be printed in French.

A further problem with existing systems is that it may not be realistic because of the paperwork involved to offer individual sales assistants incentives to process (complete) the VAT refund transaction records. As the actual process of completing transaction records requires additional work on the part of the sales assistant, there may be some reluctance because of the additional work to offer the VAT refund (transaction record completion) to customers. This problem is overcome in the present invention by the optional provision of a table identifying employees of a supplier and an associated employee code. During the transaction record generation process, the employee may associate themselves with individual VAT refund transaction records. This information may be uploaded to the host management service, which can analyse it and provide incentives to employees of suppliers who process transactions. For example, gifts may be awarded to the employees who generate the highest value or quantity of VAT refund transaction records in a month. The information may also be used for fraud investigation purposes.

After a transaction record has been initiated, the transaction record may still require modification. Accordingly, the terminal may be provided with features to facilitate the recalling/modifying of a transaction record, the reprinting of a transaction record or the cancellation of a transaction record.

It will be appreciated that before any refund transaction records may be generated by the terminal, some information will required to be captured on the terminal, including for example the supplier details, VAT rates, transaction record numbers, descriptions etc. These details are typically captured when the terminal is installed, however it is preferable that the terminal is adapted to facilitate the updating or replacement of this information at any time, either by connecting to a terminal management server, software upgrade or manual entry at the terminal itself. To ensure terminal security, access may be password or otherwise restricted.

As explained previously, a key disadvantage of the existing paper based systems is the necessity to manually enter all of the details into the VRA's computer. The present invention overcomes this problem by providing for the capturing of details by a terminal user. However to ensure maximum benefit is provided by the availability of this captured data, it must be transferred to the VRA's computer system.

The present invention provides a solution to these problems using a batch-in process akin to the batching processes used to provide payment card transaction data to collection hosts. The batch in process may be scheduled to occur at specified times (if there is data to be batched) and/or when a predetermined limit of transactions has been reached (to ensure the terminal does not run out of available memory). The batch in process is relatively simple and involves the extraction of the previously stored transaction record details including the transaction record number, transaction details (goods descriptions etc.), refund options etc. from the VRF section of memory 37. This extracted information is then assembled for all the transaction records and packaged with a suitable header and footer and uploaded to the VRA's server. Once the information has been successfully uploaded, the information on the terminal may be erased and/or supplier copies or summaries printed etc.

At the time of uploading, the terminal may check to determine whether a new range of transaction records is required. If new transaction records are required, then a request for transaction records may be forwarded to the server and a new transaction record range retrieved and inserted into the Transaction Allocation Table.

Although the present invention has been primarily described with reference to payment cards of the types generically referred to as Credit, Debit or Charge cards, it will be appreciated that the system may also have application with other types of cards including for example, prepaid cards, electronic wallets, bank cards for ATM's, "LASER" cards, loyalty and/or membership cards etc. It will further be appreciated that whilst the tables and generation of the VAT transaction record generation have been described separately from the payment card processing elements, the software code and tables may be common or shared.

In a further embodiment, the invention provides for a transaction record verification system which is adapted to facilitate a customer submitting a VAT refund claim.

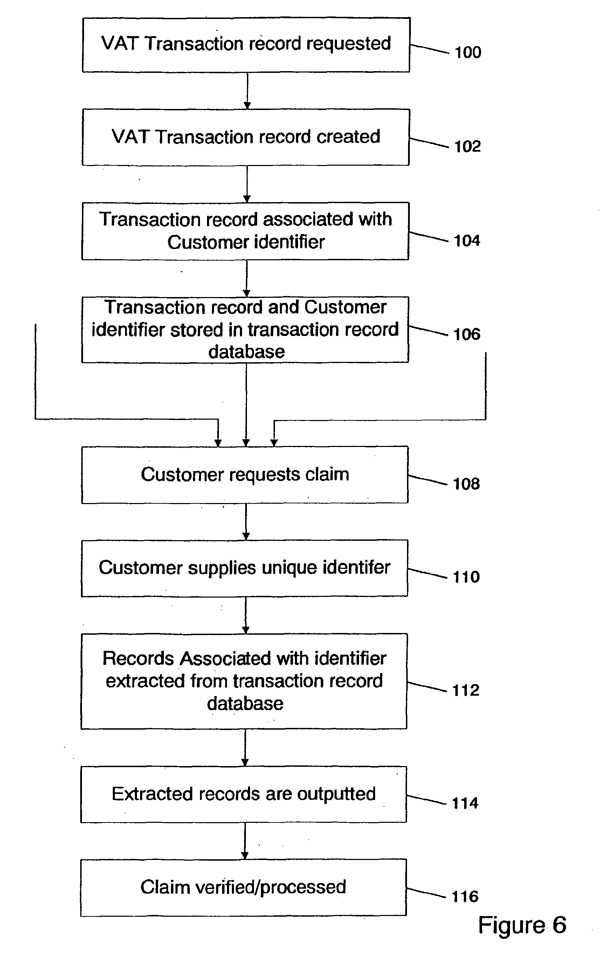

The operation of this system will now be described with reference to Figure 6. The method commences with an indication that a VAT transaction record is to be created. In response to receiving such an indication, a VAT transaction record is generated for example by a terminal as described above. In addition, the transaction record is associated with a unique customer identifier. The unique customer identifier may comprise the customer's payment card details, their passport, identification and/ or immigration number. Alternatively, the unique customer identifier may be generated by the VRA and assigned to the customer. The generated identifier may be stored on a card and/or a host for ease of retrieval.

Once the customer identifier is provided, for example by keying the details into a terminal, the transaction record is associated with the customer identifier. Once associated, the transaction record and customer identifier may be stored 106 in a transaction record database for subsequent processing.

The process of generating a transaction record and the association of the transaction record with a customer identifier may be repeated a number of times, e.g. each time the customer makes a purchase.

The latter part of the process uses a retrieval system. A suitable retrieval system for retrieval of stored transaction records may typically be provided at points of departure from a country or region, for example at airports and/or ferry terminals. The retrieval system may be operated by the Customs officials, VRA, or may be a standalone machine operable by customers.

In any case, the retrieval commences with the user making a request 108 to process a refund claim. The customer/system operator then enters 110 the customer's unique identifier into the system. In response to the entry of the unique identifier, the system interrogates the database and extracts 112 all transaction records associated with the unique identifier.

Once the records have been extracted they may be outputted 114 as a refund claim. This refund claim may comprise the displaying on the screen of a Customs official for verification of the goods purchased. The records may also be outputted in a printed form, e.g. as an aggregated list of transactions.

Once the claim has been has been verified 116, the system may be updated to reflect the verified status and the VRA may process the claim for payment.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A VAT refund transaction record system comprising a payment card system suitable for performing payment card transactions at a point of sale, the card system comprising a display for displaying information to a card system user, at least one data capture device for receiving card details from a cardholder, an indication receiving element for receiving an indication that a VAT refund record may be appropriate for a transaction, and a record generation module for generating a VAT refund transaction record in response to a received indication that a VAT refund record is appropriate for a transaction and communicating this generated record to at least one associated record output device.

2. A VAT refund transaction record system according to claim 1, wherein the record output device comprises a printer for printing a VAT refund claim.

3. A VAT refund transaction record system according to claim 1 or claim 2, wherein the record output device may comprise a communications device adapted to forward generated transaction records to a host.

4. A VAT refund transaction record system according to any preceding claim, wherein the record output device may comprise a memory writer adapted to output VAT refund transaction records to a removable data storage device. The removable data storage device may be a memory card.

5. A VAT refund transaction record system according to any preceding claim, wherein the payment card system includes a VAT recognition module for recognising from the card details entered for a payment card presented by a cardholder for payment whether or not the cardholder may be eligible to a VAT refund.

6. A VAT refund transaction record system according to claim 5, where in response to a recognition that a cardholder may be eligible to a VAT refund, the VAT recognition module causes a message to be displayed on the display and/or cause a beep to be emitted from the speaker of the card system or other prompting method so that it is clearly brought to the attention of the terminal user that a VAT refund is possible.

7. A VAT refund transaction record system according to claim 5 or claim 6, wherein the VAT recognition module is adapted to identify an issuer code from the card details, and from the issuer code determine whether the cardholder is entitled to a VAT refund.

8. A VAT refund transaction record system according to claim 7, wherein the identification of issuer code is performed by comparison of the extracted issuer code with selections in a table.

9. A VAT refund transaction record system according to claim 8, wherein each selection in the table may contain an issuer code and a corresponding VAT class code.

10. A VAT refund transaction record system according to claim 8, wherein the selections in the table may define a range of issuer codes, with each range of issuer codes having a corresponding VAT class code.

11. A VAT refund transaction record system according to claim 9 or 10, wherein the VAT class code is a flag indicating whether the issuer code relates to a cardholder from a country to which the customer would be entitled to a VAT refund.

12. A VAT refund transaction record system according to claim 5 or 6, the VAT recognition module may extract a country identifier from the card details and from this country identifier determine whether the cardholder is potentially entitled to a VAT refund.

13. A VAT refund transaction record system according to anyone of claims 5 to 12, wherein the VAT recognition module exploits other read/capture inputted details, for example passport and/or immigration numbers etc to enhance the eligibility delineation for potential zero VAT liability for customers.

14. A VAT refund transaction record system according to anyone of claims 5 to 13, wherein the VAT recognition module is adapted to initially check to determine if the transaction amount exceeds a predetermined minimum level for generating a VAT refund transaction record.

15. A VAT refund transaction record system according to any preceding claim, wherein the system is adapted to display a message prompting the terminal user to question the cardholder as to whether the cardholder desires a VAT refund claim form.

16. A VAT refund transaction record system according to any preceding claim, wherein the indication receiving means comprises a key on a keypad of the card system.

17. A VAT refund transaction record system according to any previous claim wherein the system comprises a payment card terminal having an integrated display, with an integrated printer and/or data writer.

18. A method of operating a VAT refunding scheme for processing VAT refunds on transactions comprising the steps of: in response to a request to create a refund transaction record for an individual, creating a refund transaction record, associating the refund transaction record with the individual, storing the associated transaction record in response to receiving a request to process created refund transaction records, extracting stored transaction records associated with the individual and outputting the records associated with the individual in an aggregated form.

19. A method of operating a VAT refunding scheme according to claim 18, wherein the association of the refund transaction record with the individual is achieved using a unique identifier associated with the individual.

20. A method of operative a VAT refunding scheme according to claim 19, wherein unique identifier is the car number of a payment card of the individual.

21. A method of operating a VAT refunding scheme according to claim 19, wherein the unique identifier is the passport number of the individual.

22. A method of determining whether a payment cardholder is entitled to a VAT refund by comparison of cardholder details obtained from the card with entries in a database

23. A method of determining whether a payment cardholder is entitled to a VAT refund according to claim 22, wherein the cardholder details comprise a portion of the card number.

24. A method of determining whether a payment cardholder is entitled to a VAT refund according to claim 22, wherein the cardholder details comprise a country code.

25. The use of a method according to anyone of claims 22 to 24 in a payment card terminal or a till system for generating VAT refund claims.

26. The use of a method in accordance with claim 25 performed in conjunction with a host system.

27. A computer system adapted to carry out the method steps of any one of claims 18 to 24.

28. A computer system according to claim 27, wherein the computer system is a payment card terminal or a POS till device incorporated payment card processing.
